# EUROPEAN PATENT SPECIFICATION

(11) **EP 0 745 320 B1**
(45) Date of publication and mention of the grant of the patent: **06.02.2002**
(21) Application number: 96201251.4
(22) Date of filing: 10.05.1996
(51) Int. Cl.: A01F 15/08

(54) **A bale press**
Ballenpresse
Presse à balles

(30) Priority: 31.05.1995 NL 1000458
(43) Date of publication of application: 04.12.1996
(73) Proprietor: MAASLAND N.V., 3155 PD Maasland (NL)
(72) Inventor: van der Lely, Olaf, 6312 Steinhausen (CH); van der Lely, Alexander, 6340 Baar (CH)
(74) Representative: Corten, Maurice Jean F.M.

(56) References cited:
- EP-A- 0 264 497
- FR-A- 1 340 188
- US-A- 3 424 081

## Description

The present invention relates to a bale press as described in the preamble of claim 1.

Such a bale press is known from FR-A-1340188. This bale press has the disadvantage that different materials cannot be processed satisfactorily.

In document US-A-3424081 a bale press is described having a compressing chamber with a fixed side wall comprising an adjustable wall portion. This wall portion is rugged and provides so greater friction and so greater resistance to a movement of the bale. By adjusting this wall portion, the pressure to the bale can be adjusted, but this also effects the rate of friction. This means that the friction and the pressure can not be adjusted independently.

The present invention aims at obviating this drawback or at least improving therein. According to the invention, this will be achieved by the features as defined in the characterizing part of claim 1. By means of a suchlike construction, the friction of a bale to be pressed against the interior circumference of the compression chamber is adjustable by locally increasing the pressure on the bale. Depending on the kind of material to be pressed, this will result in an improved structure of the bale and a higher density thereof.

In a particular embodiment, one of the two wall portions comprises at least one friction element having a rough, at least rugged surface. This is a relatively simple way of preventing material already pressed from rebounding and coming loose. Therefore, the invention also relates to a bale press including a substantially rectangular compression channel provided with walls, at least one of which comprising at least one friction element having a rough surface.

According to a particular inventive feature, the friction element constitutes part of the second wall portion. A suchlike construction enables a better separate adjustment of the pressure on the bale and the roughness or ruggedness of a wall portion.

The invention also relates to a construction in which the friction element comprises an interchangeable friction surface, enabling in particular a simple and quick adaptation of the machine to the compression of different materials.

Again an other inventive feature relates to a bale press comprising a pressure gauge for the purpose of measuring the pressure exercised by a bale on a wall, or the pressure exercised by a wall part on its fastening. In a particular embodiment, the pressure gauge is included in a control circuit including a control unit and an actuator, by means of said control circuit an adjusting element for a wall or a wall portion, depending on the difference between the pressure measured and an adjustable pressure desired, is automatically controllable.

According to the invention, a favourable form of friction is obtained when the friction element comprises at least one projection having an operative surface whose direction component extends transversely to the direction of conveying of the material. There is obtained a friction element that is favourable for obtaining a high pressure, when said element comprises one or more adjustable projections. In an advantageous embodiment, a friction element comprises at least one projection having a corrugated profile. Preferably, the friction element is provided with at least one row of projections.

In accordance with a favourable embodiment of the present bale press, near the inlet opening of the compression chamber, both the first and the second wall portion are pivotable about a shaft orientated transversely to the direction of conveying of the material, and, near the outlet opening of the compression chamber, both wall portions are movable relative to the centre of the compression chamber via an adjusting element with remote control. In a preferred embodiment, only one of the two wall portions is provided with projections, and said portion including projections is adjustable by means of an adjusting element that is supported relative to the other wall portion, which adjusting element, in accordance with the present invention, is pivotably connected to a bracket attached to said other wall portion.

For a better understanding of the present invention and to show how the same may be carried into effect, reference will now be made, by way of example, to the accompanying drawings, in which:
Figure 1 shows, in side view, a bale press according to the invention;
Figure 2 is a plan view according to the line II-II of Figure 1, and
Figure 3 is a plan view of a wall of the machine according to the invention, in an embodiment in which the operative surface of a wall portion is designed as an interchangeable one.

In the drawings, corresponding parts have been indicated by the same reference numerals. Furthermore, the invention is by no means restricted to the embodiments shown and described here; they only serve to illustrate the inventive idea.

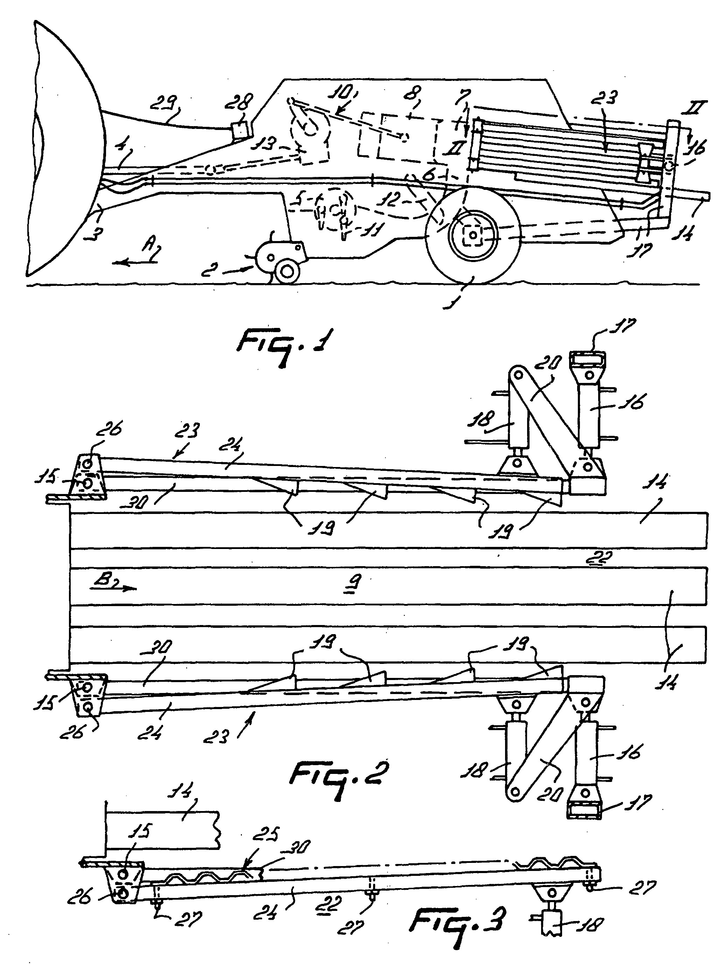

Figure 1 shows, in side view, a bale press for pressing at least substantially rectangular bales, constituted in the present invention by a movable press, primarily destined for pressing crop residues, such as hay or straw. The embodiment shown also comprises a pick-up member for picking up crop residues lying on the field. To that end the represented press is provided with members known per se, such as wheels 1, a pick-up member 2 for picking up crop residues lying on the soil, a pole 3 for its coupling to the draw-hook of a tractor and a universal joint shaft 4 for its connection to the power take-off shaft of a tractor and for the drive of the bale press. The bale press additionally comprises a beater member 5 for the purpose of displacing crop picked up by the pick-up member 2 in the direction of a conveyor housing 6 ending in a beat chamber 7 of a plunger 8, by means of which the picked up crop is pushed, in the direction of pressing B, into a compression chamber, constituted by a rectangular compression channel 9. In the present embodiment, the beater member 5 is designed as a flail member whose axis is orientated horizontally and transversely to the direction of travel and on which there are provided flails 11, that may be designed knife-shaped in such a way that the knife side of the flail 11 is situated transversely to the axis of rotation of the beater member 5 and on the beating side of the flail 11. In a preferred embodiment, the beater member 5 cooperates with (non-shown) cutting plates extending upwardly from the bottom of the conveyor channel in the direction of travel A. The cutting effect of the beater member 5 is increased by the cooperation with said knives. From the conveyor channel the picked up crop is pushed up by means of a lifting member 12 rotating about an eccentric and driven from a gear box 13, to which the coupling shaft 4 is connected, from which gear box, by means of an eccentric 10, also the plunger 8 is driven. The lifting member 12 and the plunger 8 are driven in such a phase that the plunger 8 starts to move over the relevant opening in the beat chamber 7, when the lifting member 12 is in its highest position and just starts to withdraw.

The compression channel 9, due to its structure also called compression cage or compression chamber, is in cross-section at least substantially rectangular and comprises, in the present embodiment, lying lower and upper side walls 22 including guide elements i.e. railings 14, designed here as rectangular box girders, which are arranged in the longitudinal direction of the compression chamber 9. The standing side walls 23 of the compression chamber 9 each comprise a similar fencing 30, also consisting of guide elements, such as rectangular box girders, arranged at least substantially in the longitudinal direction of the compression chamber 9. In the present embodiment, the guide elements 14 of the lower lying wall rearwardly extend beyond those of the further walls. Near the beginning of the compression chamber 9, this fencing 30 is pivotably adjustable about a substantially upwardly directed pivot shaft 15. For this adjustment there is provided a first adjusting element 16, here constituted by a hydraulic cylinder, which is controllable from the tractor. The adjusting element 16 is substantially orientated transversely to a pivot shaft 15 and is pivotably connected with a frame part 17 guided around the rearmost end of the compression chamber 9. The frame part 17 is guided, in the form of a frame work, at some distance around the compression channel 9 in such a way that very high pressure forces can be exercised therein. In the standing side walls 23 there is further included a second fencing 24 whose guide elements extend parallel to the guide elements 14 of the first fencing 30, but therebetween. To that end, the second fencing 24 is also pivotable about a pivot shaft 26, near the beginning of the compression channel 9. The pivot shaft 26 extends parallel to the pivot shaft 15 and coincides therewith in a preferred embodiment. The second fencing 24 is adjustable relative to the first fencing 30 by means of a second adjusting element 18, here designed as a hydraulic adjusting cylinder. For that purpose, from the end of the first fencing 30, a bracket 20 extends outwardly and, in the present embodiment, rearwardly. The adjusting element 18 is controllable and adjustable independently of the adjusting element 16. In a preferred embodiment, there are provided on the guide elements 14 of the second fencing 24 irregularities 19, preferably but not necessarily constituted by barbs. By irregularities there is also meant in this case a structure of the operative surface of the second fencing. 24 being such that the ruggedness thereof is increased. Appropriate to this purpose are e.g., depending on the material to be pressed, a rubber surface or a surface that is comparable with that of sandpaper. In the present embodiment, the irregularities 19 have the shape of a right-angled triangle whose hypotenuse extends at an angle between 5° and 40° relative to the longitudinal direction of the second fencing 24.

The function of the adjustable fencings 30, 24 is to increase the pressure on the bale of crop, formed in a manner known per se, in the compression channel 9. The subdivision of a standing wall 23 in a first and a second wall portion 30, 24 enables to profile a side wall 23 that is adjustable and by means of which there can be obtained a favourable compression of the bale. Preferably, the guide elements of the second fencing 24 have a smaller width than those of the first fencing. The function of the irregularities 19 is further to condense the hay bale and to prevent the compressed material from rebounding in the direction of the inlet opening, which may be larger than the outlet opening. Therefore, the irregularities 19 are preferably designed as barbs. In an other embodiment, the irregularities 19 are placed behind each other, so that the material in the bale, after having been compressed for a while, will be able to settle more quickly when, after having passed an irregularity 19, it is released from compression for a short while. By adjusting the second wall portion 24 via a second adjusting element 18 connected with the first wall portion 30, a roughness of a wall 23 once adjusted for the material to be processed can be maintained when, via the first adjusting element 16, the desired density of the bale to be formed is adjusted.

In the position represented in Figure 2, the second adjusting element 18 is still adjustable in such a way that the irregularities 19 between the railings 14 of the first wall portion 30 can be withdrawn.

Figure 3 shows, in plan view, a standing and, as described in the foregoing, movable wall 23 including an extension piece 25 for a simple adaptation of the roughness structure to the material to be pressed. In the embodiment shown, the extension piece 25 has a roughness corresponding to that of corrugated iron. By means of flat-headed bolts 27, the extension piece 25 is attached to the railings of the second wall portion 24. The shown extension piece 25 constitutes part of a collection of extension pieces having operative surfaces of varying irregularity, both with regard to their structure and their size, i.e. the extent to which the projections of such an irregular surface extend from the second wall portion in the compression channel 9. In a non-shown alternative embodiment, for the purpose of adapting the operative surface to the material to be pressed, the entire second wall portion is interchangeably included in the machine. In yet an other non-shown embodiment, the axes 15 and 26 coincide.

In a further non-shown embodiment, the machine comprises a pressure gauge, disposed in a wall of the compression channel 9, preferably in a movable wall 30. In said embodiment, the pressure gauge supplies an electronic signal to a regulating unity 28. The supplied signal represents the pressure exercised by the compressed material on a wall. In the regulating unity there can be adjusted a desired pressure via a control panel, provided with an electric connecting cable 29, to be included in the cabin of a tractor by which the bale press is driven. For that purpose, the control panel comprises a keyboard and a display screen. In a cheaper embodiment, by means of a scale indicator, the desired pressure can be adjusted mechanically and in the immediate vicinity of the regulating unit. The regulating unit 28 drives an actuator, as a resultant of a continuous comparison between the actual pressure in the bale chamber 9 and the adjusted desired pressure. In the present embodiment, the actuator influences a hydraulic sliding block included in the line of the first adjusting element 16. According to the difference between the actual pressure and the adjusted pressure, the first adjusting element 16 is put out or withdrawn. The regulating unity comprises a control entrance for interrupting the above-described regulation and adjusting the movable walls 23 in the widest position of the compression channel 9, whereby also the irregularities 19 are put out of their operative position. In a refined embodiment, the machine comprises two pressure absorbing elements arranged between a frame part 17 of the machine and a first wall portion, respectively between the bracket 20 and the second wall portion 24. This embodiment provides in the above-described manner for a separate regulation and adjustment both of the roughness of a movable wall, i.e. a second wall portion 24, and the pressure allowed by a movable wall 23 in the compression channel 9. whereby the pressure gauge may be disposed between the adjusting element and a wall portion or a frame portion 17, respectively. the bracket 20, but in the adjusting element 16, 18 itself as well.

## Claims

1. A bale press including a substantially rectangular compression channel (9) provided with walls (22, 23), the distance of at least one of which to the centre of the compression channel (9) being adjustable and whereby at least one wall (23) comprises two adjustable portions (30, 24), **characterized in that** the said adjustable portions (30, 24) are separately adjustable.

2. A bale press as claimed in claim 1, **characterized in that** one of the two wall portions comprises at least one friction element (19, 25) having a rough, at least rugged surface.

3. A bale press as claimed in claim 1 or 2, **characterized in that** the friction element (19, 25) constitutes part of the second wall portion (24).

4. A bale press as claimed in claim 1, 2 or 3, **characterized in that** the friction element (19, 25) comprises an interchangeable friction surface (25).

5. A bale press as claimed in any one of the preceding claims, **characterized in that** the friction element (19, 25) comprises at least one projection (19) having an operative surface whose direction component extends transversely to the direction of conveying B of the material.

6. A bale press as claimed in any one of the preceding claims, **characterized in that** the friction element (19, 25) comprises at least one projection (19) having a corrugated profile.

7. A bale press as claimed in any one of the preceding claims, **characterized in that** the friction element (19, 25) comprises at least one row of projections (19).

8. A bale press as claimed in any one of the preceding claims, **characterized in that** the roughness of the friction surface (25) is comparable with that of sandpaper.

9. A bale press as claimed in any one of the preceding claims, **characterized in that** a second adjusting element (18) influences the second wall portion (24).

10. A bale press as claimed in claim 9, **characterized in that** the second adjusting element (18) influences the end of the second wall portion (24), situated near the outlet opening of the compression chamber (9).

11. A bale press as claimed in any one of the preceding claims, **characterized in that** an adjusting element (16, 18) is controllable from the tractor.

12. A bale press as claimed in any one of the preceding claims, **characterized in that** the second adjusting element (18) is connected to a bracket (20) attached to the first wall portion.

13. A bale press as claimed in any one of the preceding claims, **characterized in that** the machine comprises a pressure gauge for the purpose of determining the pressure in the compression channel (9).

14. A bale press as claimed in claim 13, **characterized in that** the pressure gauge is included in a side wall (22).

15. A bale press as claimed in claim 13, **characterized in that** the pressure gauge is included between a movable wall (22) and a frame part (17) of the machine.

16. A bale press as claimed in claim 13, 14 or 15, **characterized in that** a pressure gauge influences regulating means for automatically controlling, depending on the measured pressure, an adjusting element (16, 18).

## Patentansprüche

1. Ballenpresse mit einem im wesentlichen rechteckigen Preßkanal (9), der mit Wänden (22, 23) versehen ist, wobei der Abstand mindestens einer dieser Wände zur Mitte des Preßkanals (9) einstellbar ist, und wobei mindestens eine Wand (23) zwei einstellbare Teile (30, 24) umfaßt,
**dadurch gekennzeichnet, daß** die einstellbaren Teile (30, 24) separat einstellbar sind.

2. Ballenpresse nach Anspruch 1,
**dadurch gekennzeichnet, daß** einer der beiden Wandteile mindestens ein Reibelement (19, 25) umfaßt, das eine rauhe, zumindest unebene Oberfläche aufweist.

3. Ballenpresse nach Anspruch 1 oder 2,
**dadurch gekennzeichnet, daß** das Reibelement (19, 25) Bestandteil des zweiten Wandteiles (24) ist.

4. Ballenpresse nach Anspruch 1, 2 oder 3,
**dadurch gekennzeichnet, daß** das Reibelement (19, 25) eine austauschbare Reibfläche (25) aufweist.

5. Ballenpresse nach einem der vorhergehenden Ansprüche,
**dadurch gekennzeichnet, daß** das Reibelement (19, 25) mindestens einen Vorsprung (19) mit einer Wirkoberfläche umfaßt, deren Richtungskomponente sich quer zur Beförderungsrichtung B des Gutes erstreckt.

6. Ballenpresse nach einem der vorhergehenden Ansprüche,
**dadurch gekennzeichnet, daß** das Reibelement (19, 25) mindestens einen Vorsprung (19) mit einem gerippten Profil aufweist.

7. Ballenpresse nach einem der vorhergehenden Ansprüche,
**dadurch gekennzeichnet, daß** das Reibelement (19, 25) mindestens eine Reihe von Vorsprüngen (19) aufweist.

8. Ballenpresse nach einem der vorhergehenden Ansprüche,
**dadurch gekennzeichnet, daß** die Rauhigkeit der Reibfläche (25) mit der von Sandpapier vergleichbar ist.

9. Ballenpresse nach einem der vorhergehenden Ansprüche,
**dadurch gekennzeichnet, daß** ein zweites Stellglied (18) auf den zweiten Wandteil (24) einwirkt.

10. Ballenpresse nach Anspruch 9,
**dadurch gekennzeichnet, daß** das zweite Stellglied (18) auf das Ende des zweiten Wandteiles (24) einwirkt, das sich nahe der Auslaßöffnung der Preßkammer (9) befindet.

11. Ballenpresse nach einem der vorhergehenden Ansprüche,
**dadurch gekennzeichnet, daß** ein Stellglied (16, 18) vom Schlepper aus steuerbar ist.

12. Ballenpresse nach einem der vorhergehenden Ansprüche,
**dadurch gekennzeichnet, daß** das zweite Stellglied (18) mit einem Bügel (20) verbunden ist, der an dem ersten Wandteil angebracht ist.

13. Ballenpresse nach einem der vorhergehenden Ansprüche,
**dadurch gekennzeichnet, daß** die Maschine einen Druckmesser umfaßt, um den Druck im Preßkanal (9) zu ermitteln.

14. Ballenpresse nach Anspruch 13,
**dadurch gekennzeichnet, daß** der Druckmesser in einer Seitenwand (22) angeordnet ist.

15. Ballenpresse nach Anspruch 13,
**dadurch gekennzeichnet, daß** der Druckmesser zwischen einer beweglichen Wand (22) und einem Rahmenteil (17) der Maschine angeordnet ist.

16. Ballenpresse nach Anspruch 13, 14 oder 15,
**dadurch gekennzeichnet, daß** ein Druckmesser auf eine Reguliervorrichtung einwirkt, die in Abhängigkeit von dem gemessenen Druck ein Stellglied (16, 18) automatisch steuert.

## Revendications

1. Presse à balles comprenant une voie de compression substantiellement rectangulaire (9) dotée de parois (22, 23), la distance au moins de l'une desquelles jusqu'au centre de la voie de compression (9) étant ajustable et par laquelle au moins une paroi (23) comprend deux parties ajustables (30, 24), **caractérisée en ce que** lesdites parties ajustables (30, 24) peuvent être ajustées indépendamment l'une de l'autre.

2. Presse à balles selon la revendication 1, **caractérisée en ce que** l'une des deux parties de paroi comprend au moins un élément de frottement (19, 25) ayant une surface rugueuse, et au moins robuste.

3. Presse à balles selon la revendication 1 ou 2, **caractérisée en ce que** l'élément de frottement (19, 25) est une partie constituante de la seconde partie de paroi (24).

4. Presse à balles selon la revendication 1, 2 ou 3, **caractérisée en ce que** l'élément de frottement (19, 25) comprend une surface de frottement interchangeable (25).

5. Presse à balles selon l'une quelconque des revendications précédentes, **caractérisée en ce que** l'élément de frottement (19, 25) comprend au moins une dent (19) ayant une surface opératoire dont l'indicateur de direction s'étend transversalement par rapport au sens de transport B du matériau.

6. Presse à balles selon l'une quelconque des revendications précédentes, **caractérisée en ce que** l'élément de frottement (19, 25) comprend au moins une dent (19) ayant un profilé ondulé.

7. Presse à balles selon l'une quelconque des revendications précédentes, **caractérisée en ce que** l'élément de frottement (19, 25) comprend au moins un rang de dents (19).

8. Presse à balles selon l'une quelconque des revendications précédentes, **caractérisée en ce que** la rugosité de la surface de frottement (25) est comparable à celle du papier de verre.

9. Presse à balles selon l'une quelconque des revendications précédentes, **caractérisée en ce qu'**un second élément d'ajustement (18) agit sur la seconde partie de paroi (24).

10. Presse à balles selon la revendication 9, **caractérisée en ce que** le second élément d'ajustement (18) agit sur l'extrémité de la seconde partie de paroi (24), située près de l'orifice de sortie de la chambre de compression (9).

11. Presse à balles selon l'une quelconque des revendications précédentes, **caractérisée en ce que** l'élément d'ajustement (16, 18) peut être commandé depuis le tracteur.

12. Presse à balles selon l'une quelconque des revendications précédentes, **caractérisée en ce que** le second élément d'ajustement (18) est articulé avec un support (20) fixé à la première partie de paroi.

13. Presse à balles selon l'une quelconque des revendications précédentes, **caractérisée en ce que** la machine comprend un contrôleur de pression destiné à déterminer la pression dans la voie de compression (9).

14. Presse à balles selon la revendication 13, **caractérisée en ce que** le contrôleur de pression est intégré dans une paroi latérale (22).

15. Presse à balles selon la revendication 13, **caractérisée en ce que** le contrôleur de pression est intégré entre une paroi mobile (22) et une partie de châssis (17) de la machine.

16. Presse à balles selon la revendication 13, 14 ou 15, **caractérisée en ce que** le contrôleur de pression agit sur les moyens de régulation pour réguler automatiquement, en fonction de la pression mesurée, un élément d'ajustement (16, 18).
